# EUROPÄISCHE PATENTANMELDUNG

(11) **EP 0 943 271 A2**
(43) Veröffentlichungstag der Anmeldung: **22.09.1999**
(21) Anmeldenummer: 98116741.4
(22) Anmeldetag: 04.09.1998
(51) Int. Cl.: A47C 31/02

(54) **Verriegelungsglied für einen Einzugstab zur profilformenden Verbindung von Polsterbezugmaterial bei Polstermöbeln und dgl. Polsterteilen**

(30) Priorität: 14.03.1998 DE 29804603 U
(71) Anmelder: Tillner, Thomas, 49205 Hasbergen (DE)
(72) Erfinder: Tillner, Thomas, 49205 Hasbergen (DE)
(74) Vertreter: Busse & Busse Patentanwälte

(57) **Zusammenfassung**

Es wird ein Verriegelungsglied (1) für einen Einzugstab (8) aus Kunststoff zur profilformenden Verbindung von Polsterbezugmaterial (20) mit einem polsterseitigen strangförmigen Halteglied (6) bei Polstermöbeln und dergleichen Polsterteilen, wie Sitz- und Rückenteilen, beschrieben. Der Einzugstab (8) ist über eine sich über seine Länge erstreckende Annähfahne (9) mit dem Polsterbezugmaterial (20) verbindbar und wird mit dem Strangförmigen Halteglied (6) durch das eine Aufnahme für dieses aufweisende Verriegelungsglied (1) verriegelt. Das Verriegelungsglied (1) ist von einem einstückigen Formkörper (2) aus Kunststoff gebildet, dessen Wandteile beidseits einer mittleren Teilungsebene (3) zwei aufeinanderfolgende Hohlräume (4; 4', 5) im wesentlichen umschließen, von denen der eine (4; 4') die Aufnahme für das strangförmige Halteglied (6) und der andere (5) eine über einen seitlichen Einführschlitz (7) zugängliche Rastöffnung für eine Rastverbindung mit dem Einzugstab (8) bildet.

## Beschreibung

Die Erfindung betrifft ein Verriegelungsglied für einen Einzugstab aus Kunststoff zur profilformenden Verbindung von Polsterbezugmaterial mit einem polsterseitigen strangförmigen Halteglied bei Polstermöbeln und dgl. Polsterteilen, wie Sitz- und Rückenteilen, gemäß dem Oberbegriff des Anspruchs 1.

Bei Polstermöbeln und dgl. Polsterteilen, wie Sitz- und Rückenteilen von insbesondere Autositzen, werden Einzugstäbe dazu verwendet, das an seiner Außenseite durch Bezugmaterial abgedeckte, auf einer geeigneten Unterlage angebrachte Polstermaterial, in der Regel Schaumstoff, in die gewünschte, sitzgerechte Form zu bringen. Das Bezugmaterial wird dabei an die Annähfahne des Einzugstabes angenäht, und der so vorbereitete Einzugstab wird im wesentlichen quer zur äußeren Oberfläche des auf dem Polstermaterial aufliegenden Bezugmaterials in das Polstermaterial durch einen Materialschlitz hineingezogen und festgelegt, wodurch eine nahtähnliche sog. Blindabheftung mit entsprechenden Profilwölbungen beidseits der Blindabheftung erzeugt wird.

Zur Festlegung des Einzugstabes im Polstermaterial ist es bekannt, C-förmige Metallkrampen als Verriegelungsglieder zu verwenden, von denen ein Ende mit dem Einzugstab und das andere Ende mit dem polsterseitigen strangförmigen Halteglied, in der Regel einem im Polsterunterbau befestigten Metalldraht, in Eingriff gebracht wird. Die Innenseite eines der beiden Endschenkel des C-Profils bildet dabei eine Aufnahme für das polsterseitige strangförmige Halteglied, während der andere Endschenkel des C-Profils in eine in den Einzugstab an der jeweils erforderlichen Verbindungsstelle eingearbeitete Durchstecköffnung eingreift.

Diese bekannte Art der Verbindung des Einzugstabes mit dem polsterseitigen Halteglied gestaltet sich in der Praxis in hohem Maße zeit- und arbeitsaufwendig und ist außerdem mit einem erhöhten Materialbedarf für den Einzugstab verbunden. Dies ist dadurch bedingt, daß in den Einzugstab vor seiner Einbringung in das Polstermaterial an den mit wechselnden Anwendungsfällen wechselnden Verbindungsstellen Durchstecköffnungen in den entsprechend massiv und groß dimensionierten Einzugstab zur Aufnahme der Metallkrampen als Verriegelungsglieder eingearbeitet werden müssen. Hinzu kommt, daß die Verbindung der Metallkrampen mit dem Einzugstab die Verwendung schwerer, üblicherweise pneumatisch betriebener Spezialverschlußzangen erfordert, die unter den gegebenen Raumverhältnissen häufig nur schwierig zu handhaben sind.

Der Erfindung liegt die Aufgabe zugrunde, ein Verriegelungsglied für einen Einzugstab aus Kunststoff zur profilformenden Verbindung von Polsterbezugmaterial mit einem polsterseitigen strangförmigen Halteglied zu schaffen, das geeignet ist, mit geringem Zeit- und Arbeitsaufwand und ohne einen erhöhten Materialbedarf für den Einzugstab dessen Verbindung mit dem polsterseitigen strangförmigen Halteglied herzustellen.

Diese Aufgabe wird nach der Erfindung durch eine Ausbildung des Verriegelungsglieds gemäß dem Anspruch 1 gelöst.

Das Verriegelungsglied nach der Erfindung ist hiernach von einem einstückigen Formkörper, vorzugsweise Spritzgußformkörper, aus Kunststoff gebildet, der mit geringem Zeit- und Arbeitsaufwand sowohl mit dem Einzugstab als auch mit dem polsterseitigen strangförmigen Halteglied verbindbar ist.

Als Werkstoff für den das Verriegelungsglied bildenden Formkörper kommen dabei alle geeigneten thermoplastischen Kunststoffe, insbesondere Polypropylen, in Betracht. Aus solchen Kunststoffen hergestellte Formkörper besitzen ein hohes Maß an Elastizität ihrer Wandungsteile und ein entsprechendes elastisches Rückstellungsvermögen, so daß sich hiermit in an sich bekannter Weise druckknopfartig Rastverbindungen bei entsprechend konturierten Verbindungsteilen auf einfache Weise ohne die Verwendung schwerer, spezieller Verbindungswerkzeuge mit Kraftantrieb herstellen lassen.

Auf diese Weise kann der eine der beiden Hohlräume des erfindungsgemäßen Verriegelungsglieds, der den Aufnahmraum für das strangförmige Halteglied bildet, mit geringem Kraftaufwand, d.h. von Hand, mit dem strangförmigen Halteglied, wie etwas einem Metalldraht, in Eingriff gebracht werden. Das gleiche gilt für den anderen der beiden Hohlräume des erfindungsgemäßen Verriegelungsgliedes, der eine Rastöffnung für eine Rastverbindung mit dem Einzugstab bildet. An dem Einzugstab selbst brauchen hierbei keine Verbindungsöffnungen in einem Raster entsprechend den vorgesehenen Verbindungsstellen angebracht zu werden, was den Montagevorgang wesentlich erleichtert. Demgemäß kann der Einzugstab auch mit geringerem Materialaufwand hergestellt werden. Die Herstellung des Rasteingriffs des Einzugsstabs mit den Verriegelungsgliedern an den beliebig entlang seiner Länge vorgesehenen einzelnen Verbindungsstellen gestaltet sich verbindungstechnisch besonders einfach dadurch, daß die Einführung in die Rastöffnung über einen seitlichen Einführschlitz erfolgt, d.h. daß der Einführstab zur Herstellung des Rasteingriffs mit der Rastöffnung durch den Einführschlitz in Richtung senkrecht zur mittleren Teilungsebene des Formkörpers eingeschoben wird.

Die erfindungsgemäßen Verriegelungsglieder bilden somit mit dem Einzugstab eine von der Erfindung mit umfaßte aus Kunststoff bestehende Vorrichtung zur Profilformung von außenseitig durch ein Bezugmaterial abgedeckten Polstermaterialien, aus insbesondere Schaumstoff, die einfach verarbeitet werden kann, einen sicheren Halt für das eingezogene Polsterbezugmaterial bietet und im übrigen auch gemeinsam mit dem Schaumstoff als Produkt mit sortengleichen Werkstoffen entsorgt werden kann.

Weitere Merkmale und Vorteile der Erfindung ergeben sich aus den Unteransprüchen und der nachstehenden Beschreibung in Verbindung mit der Zeichnung, in der zwei Ausführungsbeispiele des Gegenstands der Erfindung schematisch veranschaulicht sind. In der Zeichnung zeigt:
- Fig. 1: eine Vorderansicht eines Verriegelungsgliedes nach einem ersten Ausführungsbeispiel der Erfindung in einem Momentanzustand während seiner Verrastung mit einem Einzugstab,
- Fig. 2: eine Darstellung entsprechend Fig. 1, wobei jedoch das Verriegelungsglied in seinem mit dem Einzugstab verrasteten Zustand gezeigt ist,
- Fig. 3: eine Seitenansicht des Verriegelungsgliedes in dem verrasteten Zustand gemäß Fig. 2, wobei der Einzugstab nur in einem Endbereich dargestellt ist,
- Fig. 4: einen Schnitt nach der Linie IV-IV der Fig. 3, in gegenüber dieser vergrößertem Maßstab und in Verbindung mit einem ausschnittsweise dargestellten Polsterteil, und
- Fig. 5 bis 8: Darstellungen entsprechend den Fig. 1 bis 4 zur Veranschaulichung eines weiteren Ausführungsbeispiels des erfindungsgemäßen Verriegelungsgliedes.

Das in der Zeichnung als Ganzes mit 1 bezeichnete Verriegelungsglied ist von einem einstückigen Formkörper 2 aus thermoplastischem Kunststoff, z.B. Polypropylen, gebildet. Beidseits einer mittleren Teilungsebene 3 umschließt der Formkörper 2 mit seinen Wandteilen zwei aufweinanderfolgende Hohlräume 4 und 5. Der Hohlraum 4 bildet einen Aufnahmeraum für ein strangförmiges Halteglied 6 (Fig. 4) das im Unterbau eines Polsterteils in nicht näher dargestellter Weise festgelegt ist. Der andere Hohlraum 5 bildet eine über einen seitlichen Einführungsschlitz 7 zugängliche Rastöffnung für eine Rastverbindung mit einem Einzugstab 8, der seinerseits aus Kunststoff, z.B. Polypropylen, besteht und von einem einstückig extrudierten Profilstab gebildet ist.

Mit dem Einzugstab 8 ist eine Annähfahne 9 zwischen zwei Schenkeln des Einzugstabes 8 fest verschweißt, die sich randseitig über die Länge des Einzugstabes 8 erstreckt. Die Annähfahne 9 besteht aus einem mit dem Einzugstab 8 gleichlangen Streifen aus Vlies, Gittergewebe oder dgl. textilem Material auf der Grundlage eines mit dem Einzugstab gut verschweißbaren Kunststoffes.

Der Aufnahmeraum 4 und die Rastöffnung 5 sind durch einen Quersteg 10 des Formkörpers 2 voneinander getrennt, wobei der Rastöffnung 5 ein dem Profil des Einzugstabes 8 angepaßter Öffnungsquerschnitt gegeben ist. Der Öffnungsquerschnitt der Rastöffnung 5 und das Querschnittsprofil des Profilstabes 8 weisen bei dem dargestellten Beispiel eine ovale Grundform auf, wobei die Annähfahne 9 in Verlängerung der Längsmittellinie des Ovals angeordnet ist. Grundsätzlich können an die Stelle einer ovalen Grundform für das Querschnittsprofil des Einzugstabes 8 auch andere geeignete Profilformen, z.B. ein Rundprofil oder ein Rechteck bzw. flaches Kastenprofil oder Kombinationen dieser Profilformen, treten.

Vorzugsweise hat aber der Öffnungsquerschnitt der Rastöffnung 5 in jedem Fall eine längliche Form mit entlang der mittleren Teilungsebene 3 verlaufender Längserstreckung und dementsprechend einer geringeren Quererstreckung senkrecht zur Teilungsebene 3 zur Aufnahme eines entsprechend konturierten Einzugstabes 8. Der Einführschlitz 7 hat dabei eine Breite entsprechend der größten Quererstreckung der Rastöffnung 5 zur mittleren Teilungsebene 3.

Der Einführschlitz 7 ist von Wandteilen 11, 12 begrenzt, die sich beim Einführen des Einzugstabes 8 elastisch aufweiten und bei Beendigung der Einführbewegung des Einzugstabes 8 in die Rastöffnung 5 aufgrund ihres elastischen Rückstellvermögens selbsttätig in ihre Ausgangslage zurückkehren. Zur Erleichterung des Einführens des Einzugstabes 8 in den Einführschlitz 7 sind die den Einführschlitz 7 begrenzende Oberfläche der aufweitbaren Wandteile 11, 12 trichterförmig nach außen divergierend ausgebildet. Die Einführung des Einzugstabes 8 in den Einführschlitz 7 wird weiter dadurch erleichtert, daß die aufweitbaren Wandteile 11, 12 nach außen durch vorspringende Wandansätze 13 verlängert sind.

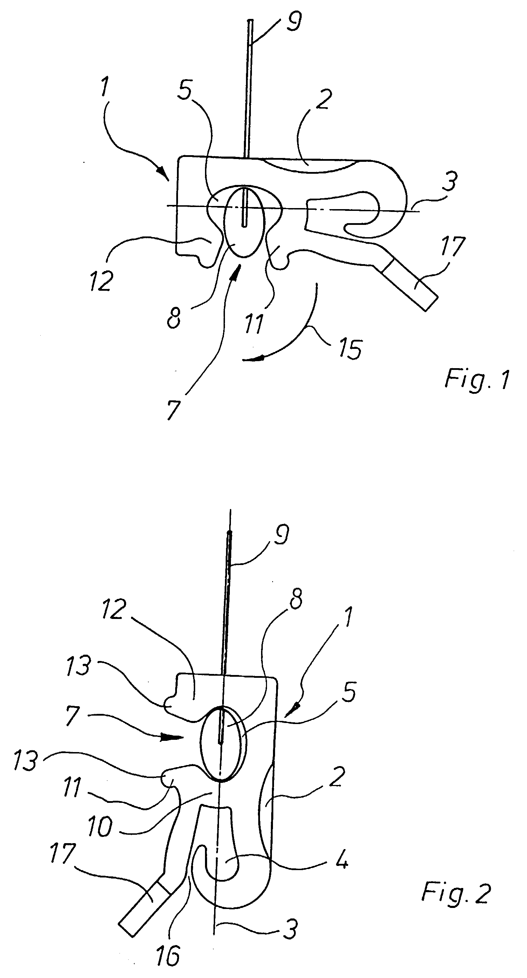

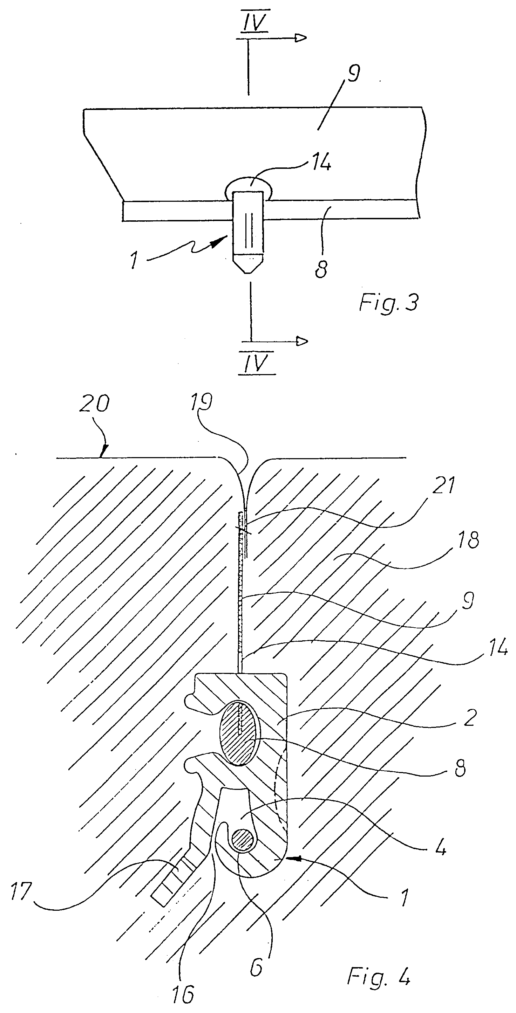

Zur Herstellung der Rastverbindung des Einzugstabes 8 mit der Rastöffnung 5 wird das Verriegelungsglied 1 durch eine in die Annähfahne 9 an der vorgesehenen Verbindungsstelle gestanzte Öffnung 14 (Fig. 3) mit vorauslaufendem Wandteil 12 hindurchgesteckt, so daß der Einführschlitz 7 in Gegen-überlage zu dem Einzugstab 8 in einer Ausrichtung gelangt, in der der Einzugstab 8 mit seiner Längserstreckung senkrecht zur mittleren Teilungsebene 3 des Verriegelungsglieds 1 steht, so daß bei Anwendung eines Einführungsdruckes auf den Einzugstab 8 und/oder das Verriegelungsglied 1 zur Herstellung des Rasteingriffs zwischen Einzugstab 8 und Rastöffnung 5 der Einzugstab 8 mit seinem der Breite des Einführschlitzes 7 angepaßten Quermaß durch den Einführschlitz 7 unter elastischer Aufweitung der Wandteile 11, 12 hindurchbewegt wird, welcher Momentanzustand in Fig. 1 veranschaulicht ist. Durch eine anschließende Drehung des Verriegelungsglieds 1 um 90° entsprechend dem Pfeil 15 gelangt das Verriegelungsglied 1 in die Stellung gemäß Fig. 2, in der der Einzugstab 8 in der Rastöffnung 5, nachdem die Wandteile 11 und 12 elastisch in ihre Ausgangslage zurückgekehrt sind, sicher verrastet ist.

Der Aufnahmeraum 4 ist von den ihn umgrenzenden Wandteilen des Formkörpers 2 normalerweise bis auf einen schmalen Öffnungsspalt 16 geschlossen. Der Öffnungsspalt 16 ist dabei von einem einstückig an den Formkörper 2 angeformten Profilschenkel 17 übergriffen, der zum Einführen des Halteglieds 6 in den Aufnahmeraum 4 elastisch nach außen verbiegbar ist.

Bei dem Ausführungsbeispiel nach den Fig. 1 bis 4 ist der Profilschenkel 17 an der den seitlichen Einführschlitz 7 zur Rastöffnung 5 aufweisenden Seite des Formkörpers 2, d.h. diesseits der mittleren Teilungsebene 3, gebildet. Dabei hat der Profilschenkel 17 eine von der Rastöffnung 5 fortweisende Ausrichtung und ist an seinem freien Ende, wie aus Fig. 3 ersichtlich, zugespitzt, was ein Einstechen in den üblicherweise als Polstermaterial Verwendung findenden Schaumstoff 18 (Fig. 4) während der Verbindung des mit dem Einzugstab 8 verrasteten Verriegelungsglieds 1 mit dem polsterseitigen Halteglied 6 erleichtert.

Aus Fig. 4, die den Einzugstab 8 im im Polstermaterial 18 eines Polsterteils verankerten Zustand zeigt, ist ein V-förmig eingezogener Bereich 19 eines Polsterbezugmaterials 20 ersichtlich, das mit der Annähfahne 9 bei 21 vernäht ist. Die V-förmige Einziehung des Polsterbezugmaterials 20 erfolgt beim Aufdrücken des Verriegelungsglieds 1 auf das polsterseitige Halteglied 6 durch den Öffnungsspalt 16 hindurch, wobei der Profilschenkel 17 elastisch nach außen aufgeweitet wird und nach dem Eindringen des Halteglieds 6 in den Aufnahmeraum 4 elastisch in seine aus Fig. 4 ersichtliche Ausgangslage zurückkehrt. In dieser Stellung ist das Halteglied 6 sicher im Aufnahmeraum 4 des Verriegelungsglieds 1 gefangen. Beidseits des V-förmigen Bereichs 19 sind durch den Einziehvorgang die gewünschten profilwölbungen im Polster entstanden.

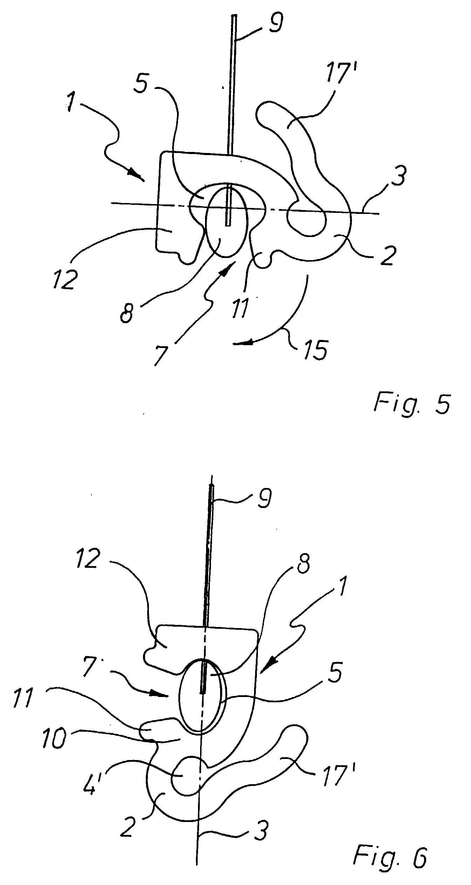

Bei dem Ausführungsbeispiel nach den Fig. 5 bis 8 ist für die Rastöffnung 5 und den Einführspalt 7 die gleiche Ausgestaltung wie bei dem ersten Ausführungsbeispiel gewählt worden. Lediglich der Aufnahmeraum 4' für das polsterseitige Halteglied 6 ist dadurch abweichend gestaltet, daß der Profilschenkel 17' an der dem seitlichen Einführschlitz 7 zur Rastöffnung 5 gegenüberliegenden Seite des Formkörpers 2, d.h. jenseits der mittleren Teilungsebene 3, gebildet ist und eine zur Rastöffnung 5 hinweisende Ausrichtung besitzt.

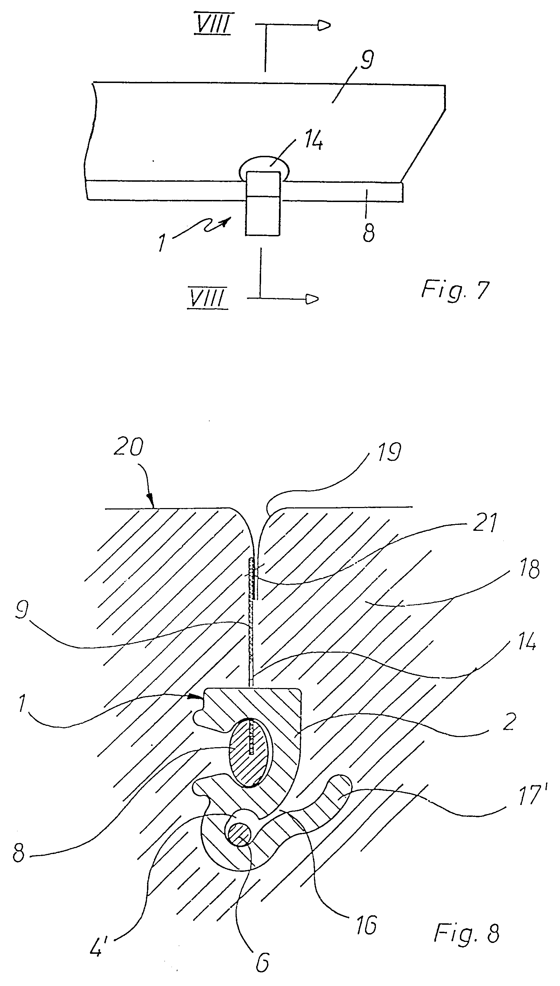

Während bei dem Ausführungsbeispiel nach den Fig. 1 bis 4, wie beschrieben, der Eingriff des Verriegelungsgliedes 1 mit dem Halteglied 6 durch ein Aufdrücken des Einzugstabes 8 mit seinen Verriegelungsgliedern 1 auf das Halteglied 6 erfolgt, wird bei der Ausführungsform gemäß den Fig. 5 bis 8 dieser Eingriff durch eine zum Polstermaterial 20 hin gerichtete Zugbewegung der Verriegelungsglieder 1 des Einzugstabes 8 hergestellt. Das Halteglied 6 wird dabei anfänglich in dem erweiterten Einführungsmaul zwischen dem Profilschenkel 17' und dem Formkörper 2 erfaßt und gelangt bei fortschreitender Zugbewegung unter elastischer Aufweitung des Öffnungsspaltes 16 in den Aufnahmeraum 4', in dem es wiederum nach der elastischen Rückkehr des Profilschenkels 17' in seine Ausgangslage sicher verriegelt ist. Diesen Verbindungszustand zeigt Fig. 8.

## Patentansprüche

1. Verriegelungsglied für einen Einzugstab aus Kunststoff zur profilformenden Verbindung von Polsterbezugmaterial mit einem polsterseitigen strangförmigen Halteglied bei Polstermöbeln und dergleichen Polsterteilen, wie Sitz- und Rückenteilen, wobei der Einzugstab über eine sich über seine Länge erstreckende Annähfahne mit dem Polsterbezugmaterial verbindbar und mit dem strangförmigen Halteglied durch das eine Aufnahme für dieses aufweisende Verriegelungsglied verriegelbar ist, dadurch gekennzeichnet, daß das Verriegelungsglied (1) von einem einstückigen Formkörper (2) aus Kunststoff gebildet ist, dessen Wandteile beidseits einer mittleren Teilungsebene (3) zwei aufeinanderfolgende Hohlräume (4; 4',5) im wesentlichen umschließen, von denen der eine (4; 4') die Aufnahme für das strangförmige Halteglied (6) und der andere (5) eine über einen seitlichen Einführschlitz (7) zugängliche Rastöffnung für eine Rastverbindung mit dem Einzugstab (8) bildet.

2. Verriegelungsglied nach Anspruch 1, dadurch gekennzeichnet, daß die Rastöffnung (5) und der Aufnahmeraum (4; 4') durch einen Quersteg (10) des Formkörpers (2) voneinander getrennt sind.

3. Verriegelungsglied nach Anspruch 1 oder 2, dadurch gekennzeichnet, daß die Rastöffnung (5) einen dem Profil des Einzugstabes (8) angepaßten Öffnungsquerschnitt aufweist.

4. Verriegelungsglied nach Anspruch 3, dadurch gekennzeichnet, daß der Öffnungsquerschnitt der Rastöffnung (5) eine längliche Form mit entlang der mittleren Teilungsebene (3) verlaufender Längserstreckung und der Einführschlitz (7) eine Breite entsprechend der größten Quererstreckung der Rastöffnung (5) zur mittleren Teilungsebene (3) aufweist.

5. Verriegelungsglied nach einem der Ansprüche 1 bis 4, dadurch gekennzeichnet, daß der Einführschlitz (7) von beim Einführen des Einzugstabes (8) elastisch aufweitbaren Wandteilen (11,12) des Formkörpers (2) begrenzt ist.

6. Verriegelungsglied nach Anspruch 5, dadurch gekennzeichnet, daß die den Einführschlitz (7) begrenzenden Oberflächen der aufweitbaren Wandteile (11, 12) trichterförmig nach außen divergieren.

7. Verriegelungsglied nach Anspruch 5 oder 6, dadurch gekennzeichnet, daß die aufweitbaren Wandteile (11, 12) nach außen durch vorspringende Wandansätze (13) verlängert sind.

8. Verriegelungsglied nach einem der Ansprüche 1 bis 7, dadurch gekennzeichnet, daß der Aufnahmeraum (4; 4') von den ihn umgrenzenden Wandteilen des Formkörpers (2) normalerweise bis auf einen schmalen Öffnungsspalt (16) geschlossen und der Öffnungsspalt (16) von einem einstückig angeformten, zum Einführen des Halteglieds (6) in den Aufnahmeraum (4; 4') elastisch nach außen verbiegbaren Profilschenkel (17) übergriffen ist.

9. Verriegelungsglied nach Anspruch 8, dadurch gekennzeichnet, daß der Profilschenkel (17) an der den seitlichen Einführschlitz (7) zur Rastöffnung (5) aufweisenden Seite des Formkörpers (2) gebildet ist.

10. Verriegelungsglied nach Anspruch 8, dadurch gekennzeichnet, daß der Profilschenkel (17') an der dem seitlichen Einführschlitz (7) zur Rastöffnung (5) gegenüberliegenden Seite des Formkörpers (2) gebildet ist.

11. Verriegelungsglied nach Anspruch 9 oder 10, dadurch gekennzeichnet, daß der abstehende Profilschenkel (17) von der Rastöffnung (5) fortweist.

12. Verriegelungsglied nach Anspruch 9 oder 10, dadurch gekennzeichnet, daß der abstehende Profilschenkel (17') zur Rastöffnung (5) hin gerichtet ist.

13. Vorrichtung zur profilformenden Verbindung von Polsterbezugmaterial (20) mit einem polsterseitigen Strangförmigen Halteglied (6) bei Polstermöbeln und dergleichen Polsterteilen, wie Sitz- und Rückenteilen, bestehend aus einem Einzugstab (8) aus Kunststoff mit einer Annähfahne (9) zur Verbindung des Einzugstabes (8) mit dem Polsterbezugmaterial (20) und einer Mehrzahl von entlang dem Einzugstab (8) voneinander beabstandeten Verriegelungsgliedern (1) zur Verbindung des Einzugstabes (8) mit dem strangförmigen Halteglied (6), dadurch gekennzeichnet, daß jedes Verriegelungsglied (1) eine Ausbildung gemäß einem der Ansprüche 1 bis 12 besitzt und die Annähfahne (9) gegenüber jedem Rastverbindungsbereich des Einzugstabes (8) mit einem Verriegelungsglied (1) eine Durchstecköffnung (14) für einen angrenzenden Wandteil (12) des das Verriegelungsglied (1) bildenden Formkörpers (2) aufweist.
